# EUROPÄISCHE PATENTANMELDUNG

(11) **EP 1 111 826 A2**
(43) Veröffentlichungstag der Anmeldung: **27.06.2001**
(21) Anmeldenummer: 00126339.1
(22) Anmeldetag: 02.12.2000
(51) Int. Cl.: H04J 3/04, H04J 3/10

(54) **Verfahren zur Unterdrückung des Übersprechens zwischen Multiplexerkanälen**

(30) Priorität: 24.12.1999 DE 19963152
(71) Anmelder: DaimlerChrysler AG, 70567 Stuttgart (DE)
(72) Erfinder: Kessler, Erwin, 88348 Saulgau (DE)
(74) Vertreter: Mader, Wilfried

(57) **Zusammenfassung**

2.1. In einer integrierten Schaltungsanordnung mit mehreren an die Eingänge eines Multiplexers angeschlossenen Signalanschlüssen kann eine Übersteuerung der Signalanschlüsse zu einem Übersprechen zwischen Multiplexerkanälen führen. Das neue Verfahren soll ein derartiges Übersprechen unterdrücken.

2.2. Um eine Übersteuerung zu vermeiden, wird die Spannung an den Signalanschlüssen auf zulässige Eingangsspannungswerte begrenzt, indem jeder übersteuerte Signalanschluß als Ausgang konfiguriert und auf einen von der Übersteuerung abhängigen High- oder Low-Pegel gesetzt wird. Dabei wird zur Überprüfung, ob ein Signalanschluß übersteuert wird, der Eingangsspannungswert an diesem Signalanschluß in einen digitalen Datenwert gewandelt, welcher aufgrund seiner endlichen Bitbreite innerhalb eines durch einen oberen und unteren Daten-Endwert begrenzten Datenbereichs liegt. Ist der Datenwert gleich oberen oder unteren Daten-Endwert, wird dies als Übersteuerung des betreffenden Signalanschlusses interpretiert.

2.3. Vermeidung des Übersprechens zwischen Multiplexerkanälen eines Mikrocontrollers mit integriertem Multiplexer und Analog-Digital-Wandler.

## Beschreibung

Die Erfindung betrifft ein Verfahren zur Unterdrückung des Übersprechens zwischen Multiplexerkanälen eines Multiplexers, der in einer Schaltungsanordnung eingangsseitig mit als Eingang und Ausgang konfigurierbaren Signalanschlüssen verbunden ist.

Aus der DE 43 21 014 A1 ist eine Schaltungsanordnung bekannt, die Eingangsspannungswerte von mehreren Signalanschlüssen über einen Multiplexer und einen Analog-Digital-Wandler einliest. In dieser Schaltungsanordnung können im Falle einer zu hohen Ansteuerung eines der Signalanschlüsse parasitäre Strompfade leitend werden. Ströme, die durch diese Strompfade fließen, können zu einem unerwünschten Übersprechen zwischen den Multiplexerkanälen des Multiplexers führen. Um ein derartiges Übersprechen zu vermeiden, werden alle Signalanschlüsse mit einem Masseanschluß verbunden und die Masseverbindung wird nur während des Einlesen eines Eingangsspannungswertes und nur für denjenigen Signalanschluß, an dem der einzulesende Eingangsspannungswert ansteht, aufgehoben.

Der wesentliche Nachteil dieser Maßnahme liegt darin, daß sie die Funktionsweise von externen, mit den Signalanschlüssen verbundenen Schaltungsteilen beeinträchtigen kann. Beinhalten derartige externe Schaltungsteile beispielsweise Filter, üblicherweise Tiefpaßfilter mit einer Grenzfrequenz, die kleiner ist als die Hälfte einer vorgegebenen Abtastfrequenz, so benötigen diese Filter nach dem Aufheben der Masseverbindung ein Vielfaches der Abtastperiode an Zeit, bis sie wieder eingeschwungen sind.

Der Erfindung liegt die Aufgabe zugrunde, ein Verfahren anzugeben, das auf einfache Weise eine ausreichende Unterdrückung des Übersprechens zwischen Multiplexerkanälen eines Multiplexers ermöglicht und das die Funktionsweise von an den Multiplexer angeschlossenen Schaltungsteilen nicht beeinträchtigt.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß ist der Multiplexer in einer Schaltungsanordnung eingangsseitig mit Signalanschlüssen der Schaltungsanordnung verbunden, die sowohl als Eingang als auch als Ausgang konfigurierbar sind. Um ein Übersprechen zwischen den Multiplexerkanälen des Multiplexers zu verhindern, wird zunächst geprüft, ob einer oder mehrere der Signalanschlüsse übersteuert wird oder werden. Danach wird jeder als übersteuerter Signalanschluß identifizierte Signalanschluß als Ausgang konfiguriert und auf einen definierten logischen Signalpegel gesetzt. Durch diese Maßnahme wird die Spannung an den Signalanschlüssen auf zulässige Eingangsspannungswerte begrenzt, so daß es nicht mehr zu einem durch die Übersteuerung bedingten Übersprechen zwischen den Multiplexerkanälen kommen kann. Die nicht als übersteuert identifizierten Signalanschlüsse können somit zum Einlesen der an ihnen anliegenden Eingangsspannungswerte freigegeben werden.

Zur Prüfung, ob eine Signalanschluß übersteuert wird, werden vorzugsweise folgende Verfahrensschritte durchgeführt: der betreffende Signalanschluß wird als Eingang konfiguriert, der Eingangsspannungswert an diesem Signalanschluß wird über den Multiplexer einem Analog-Digital-Wandler zugeführt, der ihn in einen digitalen Datenwert wandelt, und der digitale Datenwert wird mit einem oberen und/oder unteren Daten-Endwert verglichen. Der obere Daten-Endwert stellt dabei den maximalen und der untere Daten-Endwert den minimalen vom Analog-Digital-Wandler ausgebbaren Datenwert dar. Ist der vom Analog-Digital-Wandler ausgegebene digitale Datenwert gleich dem unteren oder oberen Daten-Endwert, wird davon ausgegangen, daß der betreffende Signalanschluß durch einen unzulässigen Eingangsspannungswert übersteuert ist.

Vorzugsweise wird jeder übersteuerte und als Ausgang konfigurierte Signalanschluß auf einen logischen Signalpegel gesetzt, der von dem diesem Signalanschluß zugeführten Eingangsspannungswert abhängig ist. Falls der Analog-Digital-Wandler bei der Prüfung, ob ein Signalanschluß übersteuert wird, einen dem oberen Daten-Endwert gleichen Datenwert ausgibt, wird dieser Signalanschluß auf einen High-Pegel gesetzt, gibt der Analog-Digital-Wandler hingegen einen dem unteren Daten-Endwert gleichen Datenwert aus, wird dieser Signalanschluß auf einen Low-Pegel gesetzt.

Vorzugsweise werden die Verfahrensschritte zyklisch wiederholt. Somit wird zyklisch überprüft, ob ein bereits als übersteuert identifizierter Signalanschluß weiterhin übersteuert wird und die Konfiguration dieses Signalanschlusses als Ausgang daher aufrechterhalten werden muß oder ob er nicht mehr übersteuert wird und daher zur Konfiguration als Eingang freigegeben werden kann. Zudem werden Signalanschlüsse, die bisher nicht übersteuert wurden, nunmehr aber übersteuert werden, als übersteuert identifiziert, als Ausgang konfiguriert und auf den definierten logischen Signalpegel gesetzt.

Die Erfindung soll nachfolgend anhand von Ausführungsbeispielen und Figuren näher erläutert werden. Es zeigen:
- Figur 1: ein Prinzipschaltbild einer Schaltungsanordnung zur Durchführung des erfindungsgemäßen Verfahrens,
- Figur 2: eine Treiberstufe der Schaltungsanordnung aus Figur 1.

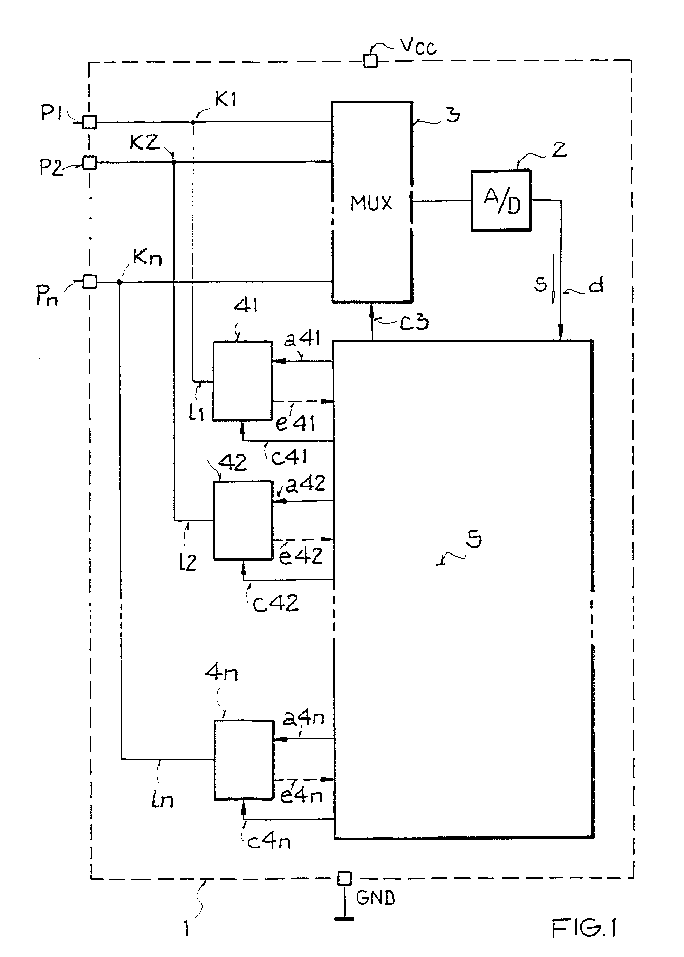

Die Schaltungsanordnung gemäß Figur 1 ist als integrierter Schaltkreis 1, beispielsweise als Mikroprozessor oder Mikrocontroller ausgeführt. Sie weist mit den Signalanschlüssen P1, P2, ... Pn mehrere Anschlußpins auf, die jeweils sowohl als digitaler Ausgang als auch als analoger Eingang konfigurierbar sind. Es ist denkbar, daß die Signalanschlüsse P1, P2, ... Pn zusätzlich auch als digitale Eingänge konfigurierbar sind. Die Schaltungsanordnung 1 umfaßt ferner einen Anschluß Vcc für ein positives Versorgungspotential, einen Anschluß GND für ein Bezugspotential oder negatives Versorgungspotential, einen Analog-Digital-Wandler 2, einen Multiplexer 3, einen Logikteil 5 und für jeden der Signalanschlüsse P1, P2, ... Pn eine Treiberstufe 41, 42, ... 4n. Die Signalanschlüsse P1, P2, ... Pn sind jeweils mit einem Eingang des Multiplexers 3 verbunden, der Multiplexer 3 ist ausgangsseitig mit einem Eingang des Analog-Digital-Wandlers 2 verbunden und der Analog-Digital-Wandler 2 ist ausgangsseitig mit dem Logikteil 3 verbunden. Der Logikteil 3 ist über jeweils eine Ausgangsleitung a41, a42, ... a4n mit jeweils einer der Treiberstufen 41, 42, ... 4n verbunden und die Treiberstufen 41, 42, ... 4n sind über jeweils eine Datenleitung 11,12, ... In und über jeweils einen Schaltungsknoten K1, K2, ... Kn mit jeweils einem der Schaltungsanschlüsse P1, P2, ... Pn verbunden. Falls die Signalanschlüsse P1, P2, ... Pn zusätzlich als digitale Eingänge konfigurierbar sind, sind die Treiberstufen 41, 42, ... 4n über Eingangsleitungen e41, e42, ... e4n mit dem Logikteil 3 verbunden. Der Multiplexer 3 und die Treiberstufen 41, 42, ... 4n werden über Steuerleitungen c3, c41, c42, ... c4n durch den Logikteil 3 angesteuert.

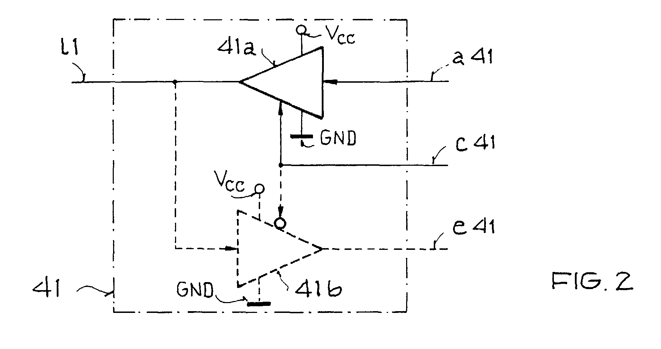

Die Treiberstufen 41, 42, ... 4n sind gleichartig aufgebaut und werden im folgenden anhand der in Figur 2 gezeigten ersten Treiberstufe 41 näher beschrieben. Gemäß Figur 2 umfaßt die Treiberstufe 41 eine Ausgangsstufe 41 a, über die die Ausgangsleitung a41 mit der an den Schaltungsknoten K1 und den Signalanschluß P1 angeschlossenen Datenleitung l1 verbunden ist. Die Ausgangsstufe 41 a ist beispielsweise als Tristate-Stufe ausgebildet und läßt sich durch den Logikteil 5 über die Steuerleitung c41 aktivieren und deaktivieren. Eine Signalübertragung von der Ausgangsleitung a41 zur Datenleitung l1 ist dabei nur bei aktivierter Ausgangsstufe 41 a möglich. Falls der Signalanschluß P1 zusätzlich als digitaler Eingang konfigurierbar sein soll, ist in der Treiberstufe 41, wie durch gestrichelte Linien angedeutet, eine Eingangsstufe 41b vorgesehen, die durch den Logikteil 5 ebenfalls aktivierbar und deaktivierbar ist und ebenfalls als Tristate-Stufe ausgebildet sein kann und die nur im aktivierten Zustand eine Signalübertragung von der Datenleitung l1 zur Eingangsleitung e41 ermöglicht.

Der Signalanschluß P1 wird durch Deaktivierung der Ausgangsstufe 41 a und Deaktivierung der Eingangsstufe 41 b als analoger Eingang konfiguriert. Eine analoge Eingangsspannung wird dann vom Signalanschluß P1 über den Multiplexer 3 zum Analog-Digital-Wandler 2 übertragen und von diesem als digitaler Datenwert s über die Datenleitung d dem Logikteil 5 zur weiteren Verarbeitung zugeführt.

Bei aktivierter Ausgangsstufe 41a und deaktivierter Eingangsstufe 41b ist der Signalanschluß P1 als digitaler Ausgang konfiguriert. Digitale Signale werden dann vom Logikteil 5 über die Ausgangsleitung a41, die Ausgangsstufe 41a, und die Datenleitung l1 zum Signalanschluß P1 übertragen. Der Signalanschluß P1 wird dabei auf einen High-Pegel gesetzt, indem die Datenleitung l1 in Antwort auf ein vom Logikteil 5 an die Ausgangsleitung a41 abgegebenes Signal über die Ausgangsstufe 41a niederohmig mit dem Anschluß Vcc für das positive Versorgungspotential verbunden wird. Entsprechend wird der Signalanschluß P1 auf einen Low-Pegel gesetzt, indem die Datenleitung l1 über die Ausgangsstufe 41a niederohmig mit dem Anschluß GND für das Bezugspotential oder negative Versorgungspotential verbunden wird.

Bei deaktivierter Ausgangsstufe 41a und aktivierter Eingangsstufe 41b ist der Signalanschluß P1 hingegen als digitaler Eingang konfiguriert, so daß digitale Signale vom Signalanschluß P1 über die Datenleitung I1, die Eingangsstufe 41b und die Eingangsleitung e41 zum Logikteil 5 übertragen werden.

In der Schaltungsanordnung 1 können herkömmliche, in den Figuren nicht gezeigte Schutzmittel zum Schutz der Schaltungsanordnung gegen Überspannungen vorgesehen sein. Es handelt sich hierbei insbesondere um Widerstände, die in den Signalpfaden zwischen den Signalanschlüssen P1, P2, ... Pn und den mit diesen jeweils verbundenen Schaltungsknoten K1, K2, ... Kn und/oder zwischen den Schaltungsknoten K1, K2, ... Kn und den mit diesen jeweils verbundenen Eingängen des Multiplexers 3 vorgesehen sind. Als Schutzmittel können ferner auch Dioden vorgesehen sein, die die Schaltungsknoten K1, K2, ... Kn jeweils mit dem Anschluß Vcc für das positive Versorgungspotential und mit dem Anschluß GND für das Bezugspotential oder negative Versorgungspotential verbinden. Die Dioden sind dabei derart gepolt, daß sie sperrend sind, wenn Potentiale an den Schaltungsknoten K1, K2, ... Kn innerhalb eines durch das positive Versorgungspotential und das Bezugspotential oder negative Versorgungspotential begrenzten zulässigen Bereichs liegen.

Der Analog-Digital-Wandler 2 erzeugt aus einem analogen Eingangsspannungswert einen digitalen Datenwert s, dessen Bitbreite durch die konstruktive Ausgestaltung des Analog-Digital-Wandlers 2 vorgegeben ist. Die Menge der möglichen digitalen Datenwerte ist daher durch einen oberen und unteren Daten-Endwert begrenzt. Bei einem beispielsweise 8 Bit breiten Datenwert s ist der untere Daten-Endwert gleich dem hexadezimalen Wert 00 und der obere Daten-Endwert gleich dem hexadezimalen Wert FF.

Um ein Übersprechen zwischen den Multiplexerkanälen des Multiplexers 3 zu vermeiden, werden zunächst diejenigen Signalanschlüsse P1, P2, ... Pn, an denen die Gefahr einer Übersteuerung besteht, als zu überprüfende Signalanschlüsse ausgewählt. Im vorliegenden Fall sind das beispielsweise die Signalanschlüsse P1 und P2. Danach wird der Reihe nach geprüft, ob die ausgewählten Signalanschlüsse P1, P2 tatsächlich übersteuert werden. Dabei werden zur Prüfung, ob einer der Signalanschlüsse P1, P2 übersteuert wird, folgende Verfahrensschritte durchgeführt: der betreffende Signalanschluß P1 bzw. P2 wird als analoger Eingang konfiguriert, der Eingangsspannungswert an diesem Signalanschluß P1 bzw. P2 wird über den Multiplexer 3 dem Analog-Digital-Wandler 2 zugeführt und von diesem in den digitalen Datenwert s gewandelt und der digitale Datenwert s wird im Logikteil 5 mit dem oberen und/oder unteren Daten-Endwert verglichen. Es reicht aus, den digitalen Datenwert s mit dem oberen Daten-Endwert zu vergleichen, wenn lediglich mit einer Übersteuerung des betreffenden Signalanschlusses P1 bzw. P2 durch einen Eingangsspannungswert zu rechnen ist, der oberhalb eines durch das positive Versorgungspotential und das Bezugspotential oder negative Versorgungpotential begrenzten zulässigen Spannungsbereichs liegt; entsprechend reicht es aus, den digitalen Datenwert s mit dem unteren Daten-Endwert zu vergleichen, wenn lediglich mit einer Übersteuerung des betreffenden Signalanschlusses P1 bzw. P2 durch einen Eingangsspannungswert zu rechnen ist, der unterhalb des zulässigen Spannungsbereichs liegt.

Ist der digitale Datenwert s gleich dem unteren oder oberen Daten-Endwert, wird der betreffende Signalanschluß P1 bzw. P2 durch Setzen eines ihm zugeordneten Übersteuerungsbits als übersteuert identifiziert und durch Setzen eines ihm zugeordneten Markierungsbits als ungültig markiert und somit zum Einlesen der Eingangsspannungswerte gesperrt. Der betreffende Signalanschluß P1 bzw. P2 wird zudem als digitaler Ausgang konfiguriert und er wird er bei einem dem oberen Daten-Endwert gleichen Datenwert s auf den dem positiven Versorgungspotential entsprechenden logischen High-Pegel gesetzt und bei einem bem unteren Daten-Endwert gleichen Datenwert s auf den dem Bezugspotential oder negativen Versorgungspotential entsprechenden logischen Low-Pegel gesetzt. Hierdurch erreicht man eine Begrenzung der Spannung an den Signalanschlüssen auf zulässige Eingangsspannungswerte, so daß ein durch unzulässige Eingangsspannungswerte bedingtes Übersprechen nicht mehr auftreten kann.

Nachdem alle als übersteuert identifizierten Signalanschlüsse als Ausgang konfiguriert und entsprechend der Übersteuerung auf den High- oder Low-Pegel gesetzt wurden, werden alle übrigen Signalanschlüsse zur Konfiguration als Eingang zum Einlesen der Eingangsspannungswerte freigegeben.

Durch zyklische Wiederholung der Verfahrensschritte wird überprüft, ob ein in einem vorangehenden Zyklus als übersteuert identifizierter Signalanschluß weiterhin übersteuert wird und ob ein Signalanschluß, der im vorangehenden Zyklus nicht übersteuert wurde, nunmehr übersteuert wird. Wie in den vorangehenden Zyklen werden Steueranschlüsse P1, P2, ... Pn, die zum aktuellen Zeitpunkt als nicht übersteuert identifiziert werden, zur Konfiguration als Eingang zum Einlesen der Eingangsspannungswerte freigegeben, und aktuell als übersteuert identifizierte Steueranschlüsse als Ausgänge konfiguriert und entsprechend den Eingangsspannungswerten auf den High- oder Low-Pegel gesetzt. Hierdurch wird gewährleistet, daß eine kurzzeitige Übersteuerung eines Signalanschlusses nicht zur dauernden Sperrung dieses Anschlusses führt.

## Patentansprüche

1. Verfahren zur Unterdrückung des Übersprechens zwischen Multiplexerkanälen eines Multiplexers (3), der in einer Schaltungsanordnung (1) eingangsseitig mit als Eingang und Ausgang konfigurierbaren Signalanschlüssen (P1, P2, ... Pn) verbunden ist, bei dem folgende Verfahrensschritte durchgeführt werden:
- es wird geprüft, ob mindestens einer der Signalanschlüsse (P1, P2, ... Pn) durch einen unzulässigen Eingangsspannungswert übersteuert wird,
- jeder als übersteuerter Signalanschluß identifizierte Signalanschluß (P1, P2, ... Pn) wird als Ausgang konfiguriert und auf einen definierten logischen Signalpegel gesetzt.

2. Verfahren nach Anspruch 1, dadurch gekennzeichnet, daß zur Prüfung, ob ein Signalanschluß (P1, P2, ... Pn) übersteuert wird, folgende Verfahrensschritte durchgeführt werden:
- der Signalanschluß (P1, P2, ... Pn) wird als Eingang konfiguriert,
- der Eingangsspannungswert am Signalanschluß (P1, P2, ... Pn) wird durch einen dem Multiplexer (3) nachgeschalteten Analog-Digital-Wandler (2) in einen digitalen Datenwert (s) gewandelt, der innerhalb eines durch einen unteren Daten-Endwert und einen oberen Daten-Endwert begrenzten Datenbereichs liegt,
- bei Gleichheit des digitalen Datenwerts mit dem oberen oder unteren Daten-Endwert wird der Signalanschluß (P1, P2, ... Pn) als übersteuert identifiziert.

3. Verfahren nach Anspruch 2, dadurch gekennzeichnet, daß jeder übersteuerte und als Ausgang konfigurierte Signalanschluß (P1, P2, ... Pn) auf einen High-Pegel als definierten logischen Signalpegel gesetzt wird, wenn der Eingangsspannungswert an diesem Signalanschluß (P1, P2, ... Pn) durch den Analog-Digital-Wandler (2) in einen dem oberen Daten-Endwert gleichen Datenwert gewandelt wird.

4. Verfahren nach Anspruch 2 oder 3, dadurch gekennzeichnet, daß jeder übersteuerte und als Ausgang konfigurierte Signalanschluß (P1, P2, ... Pn) auf einen Low-Pegel als definierten logischen Signalpegel gesetzt wird, wenn der Eingangsspannungswert an diesem Signalanschluß (P1, P2, ... Pn) durch den Analog-Digital-Wandler (2) in einen dem unteren Daten-Endwert gleichen Datenwert gewandelt wird.

5. Verfahren nach einem der vorherigen Ansprüche, dadurch gekennzeichnet, daß die Verfahrensschritte zyklisch wiederholt werden, und daß ein Signalanschluß (P1, P2, ... Pn), der in einem vorangehenden Zyklus als übersteuerter Signalanschluß identifiziert und als Ausgang konfiguriert wurde, zur Konfiguration als Eingang freigegeben wird, wenn er nicht mehr übersteuert wird.
